# EUROPÄISCHE PATENTANMELDUNG

(11) **EP 4 210 206 A1**
(43) Veröffentlichungstag der Anmeldung: **12.07.2023**
(21) Anmeldenummer: 23150095.0
(22) Anmeldetag: 03.01.2023
(51) Int. Cl.: H02K 7/104, H02K 23/00

(54) **ELEKTROMOTOR ZUM ANTRIEB EINER FAHRZEUGKLAPPE, VERWENDUNG UND VERFAHREN ZUR HERSTELLUNG DES ELEKTROMOTORS**

(30) Priorität: 10.01.2022 DE 102022100369
(71) Anmelder: STABILUS GmbH, 56070 Koblenz (DE)
(72) Erfinder: Mazepa, Sergei, 56759 Kaisersesch (DE); Hümmerich, Magnus, 56269 Dierdorf (DE); Knopp, Axel, 56337 Eitelborn (DE); Bochen, Marian, 56337 Eitelborn (DE); Höfer, Florian, 56566 Neuwied (DE)
(74) Vertreter: Bernsmann, Falk

(57) **Zusammenfassung**

Die Erfindung betrifft einen Elektromotor (100) zum Antrieb einer Fahrzeugklappe, der Elektromotor (100) umfassend einen hohlzylindrisch geformten und zu einer Motorachse (MA) koaxial angeordneten Stator (130) aus einem permanentmagnetischen Material, eine koaxial zu der Motorachse (MA) und zumindest abschnittsweise in dem Stator (130) angeordnete und relativ zu dem Stator (130) um die Motorachse (MA) rotierbar gelagerte Motorwelle (120) und einen in dem Stator (130) angeordneten und auf der Motorwelle (120) befestigten Antriebsrotor (140), umfassend eine Anzahl von Spulen (141) zum Antrieb einer Rotation der Motorwelle (120) relativ zu dem Stator (130) um die Motorachse (MA). Der Elektromotor (100) umfasst einen in dem Stator (130) angeordneten, entlang der Motorachse (MA) neben dem Antriebsrotor (140) auf der Motorwelle (120) befestigten und von dem Stator (130) magnetisierbaren Bremsrotor (150). Die Erfindung betrifft außerdem eine Verwendung des Elektromotors (100) zum Antrieb einer Fahrzeugklappe und ein Verfahren zur Herstellung des Elektromotors (100).

## Beschreibung

### Technisches Gebiet

Die Erfindung betrifft einen Elektromotor zum Antrieb einer Fahrzeugklappe, der Elektromotor umfassend einen hohlzylindrisch geformten und zu einer Motorachse koaxial angeordneten Stator aus einem permanentmagnetischen Material, eine koaxial zu der Motorachse und zumindest abschnittsweise in dem Stator angeordnete und relativ zu dem Stator um die Motorachse rotierbar gelagerte Motorwelle und einen in dem Stator angeordneten und auf der Motorwelle befestigten Antriebsrotor, umfassend eine Anzahl von Spulen zum Antrieb einer Rotation der Motorwelle relativ zu dem Stator um die Motorachse.

Die Erfindung betrifft außerdem eine Verwendung des Elektromotors zum Antrieb einer Fahrzeugklappe und ein Verfahren zur Herstellung des Elektromotors.

### Stand der Technik

Aus den Druckschriften US 2011 /0254394 A1, WO 2019/138068 A1, EP 2 192 675 A1 und EP 1 940 012 A1 sind Elektromotoren bekannt, die eine Hysteresebremse zum Abbremsen einer Rotation einer Motorwelle des Elektromotors umfassen. Eine Hysteresebremse umfasst einen auf der Motorwelle befestigten Rotor und einen an einem Gehäuse des Elektromotors befestigten Stator, wobei der Rotor als Permanentmagnet ausgestaltet und der Stator von dem Rotor magnetisierbar ist oder umgekehrt. Rotiert der Rotor relativ zu dem Stator, wird der Stator dadurch ummagnetisiert, wodurch Bewegungsenergie des Rotors in Wärme umgewandelt und die Rotation des Rotors gebremst wird.

Eine Hysteresebremse zeichnet sich gegenüber einer mechanischen Reibbremse vorteilhaft durch einen geringen Verschleiß und eine geringe Geräuschentwicklung aus. Nachteilig an bekannten Elektromotoren mit Hysteresebremse ist, dass sie gegenüber Elektromotoren mit Reibbremse teurer und aufwändiger herzustellen sind.

### Technische Aufgabe

Die Aufgabe der Erfindung ist es, einen Elektromotor und ein Herstellungsverfahren dafür zu schaffen, wobei der Elektromotor eine verschleißarme und leise Bremse umfasst und besonders einfach und kostengünstig herstellbar ist. Außerdem ist es die Aufgabe der Erfindung, ein verschleißarmes, leises und kostengünstiges Verfahren zum Antrieb einer Fahrzeugklappe zu schaffen.

### Technische Lösung

Die vorliegende Erfindung stellt einen Elektromotor gemäß Anspruch 1 bereit, der die technische Aufgabe löst. Ebenso wird die Aufgabe durch eine Verwendung des Elektromotors gemäß Anspruch 12 und ein Verfahren zur Herstellung des Elektromotors gemäß Anspruch 13 gelöst. Vorteilhafte Ausgestaltungen sind Gegenstand der abhängigen Ansprüche.

Der erfindungsgemäße Elektromotor ist zum Antrieb einer Fahrzeugklappe, beispielsweise zum Öffnen und/oder Schließen einer Tür, einer Kofferraumklappe oder einer Motorhaube eines Kraftfahrzeugs, ausgelegt.

Der Elektromotor umfasst einen hohlzylindrisch geformten und zu einer Motorachse koaxial angeordneten Stator aus einem permanentmagnetischen Material. Der Stator ist vorzugsweise einstückig ausgebildet, sodass der Elektromotor besonders einfach zusammengebaut werden kann.

Der Stator kann aus mehreren Statormodulen zusammengesetzt sein, beispielsweise um eine magnetische Feldstärke des Stators modular anpassen zu können.

Der Stator umfasst eine Anzahl von einander in Umlaufrichtung um die Motorachse abwechselnden magnetischen Nordpolen und Südpolen. Vorzugsweise umfasst der Stator zumindest zwei magnetische Nordpole und zwei magnetische Südpole, um eine gleichmäßige Antriebswirkung und Bremswirkung zu gewährleisten.

Eine Zylindermantelwand des Stators ist vorzugsweise geschlossen. Alternativ kann die Zylindermantelwand durchbrochen, beispielsweise entlang der Motorachse geschlitzt sein.

Der Elektromotor umfasst eine koaxial zu der Motorachse und zumindest abschnittsweise in dem Stator angeordnete und relativ zu dem Stator um die Motorachse rotierbar gelagerte Motorwelle. Relativ zu einer Umgebung des Elektromotors ist vorzugsweise die Motorwelle rotierbar gelagert, sodass der Elektromotor als Innenläufer ausgestaltet ist. Alternativ kann relativ zu einer Umgebung des Elektromotors der Stator rotierbar gelagert sein, sodass der Elektromotor als Außenläufer ausgestaltet ist.

Der Elektromotor umfasst einen in dem Stator angeordneten und auf der Motorwelle befestigten Antriebsrotor, umfassend eine Anzahl von Spulen zum Antrieb einer Rotation der Motorwelle relativ zu dem Stator um die Motorachse. Vorzugsweise erfolgt der Antrieb der Rotation durch eine magnetische Wechselwirkung eines von einem elektrischen Strom in den Spulen erzeugten Magnetfelds mit einem Magnetfeld des Stators. Die Stromversorgung der Spulen kann wie bei fachüblichen Elektromotoren ausgestaltet sein.

Die Spulen sind vorzugsweise auf zumindest einen auf der Motorwelle befestigten Anker gewickelt.

Bei einer Rotation des Antriebsrotors mit der Motorwelle um die Motorachse bildet der Antriebsrotor vorzugsweise einen hohlzylindrischen und zur Motorachse koaxialen Rotationskörper mit einem Außenradius radial zur Motorachse, der geringfügig kleiner, beispielsweise um 0,1 mm bis 1 mm kleiner, insbesondere um 0,2 mm bis 0,6 mm kleiner, bevorzugt um 0,3 mm kleiner, ist als ein Innenradius des Stators radial zur Motorachse. Dadurch kann der Antriebsrotor in dem Stator reibungsfrei rotieren und hat eine hohe magnetische Wechselwirkung mit dem Stator.

Der Elektromotor umfasst einen in dem Stator angeordneten, entlang der Motorachse neben dem Antriebsrotor auf der Motorwelle befestigten und von dem Stator magnetisierbaren Bremsrotor.

Wenn der Stator den Bremsrotor magnetisiert, entsteht dadurch eine magnetische Wechselwirkung zwischen dem Stator und dem Bremsrotor, die einer Rotation des Bremsrotors relativ zu dem Stator entgegenwirkt. Der Stator und der Bremsrotor wirken somit als Hysteresebremse zusammen. Die Bremswirkung tritt unabhängig von einer Stromversorgung des Elektromotors auf, sodass eine besonders hohe Sicherheit gewährleistet ist. Sobald der Bremsrotor magnetisiert ist, verhindert die magnetische Wechselwirkung zwischen Bremsrotor und Stator außerdem, dass der Bremsrotor bei stillstehendem Elektromotor relativ zu dem Stator zu rotieren beginnt. Dadurch kann beispielsweise verhindert werden, dass sich eine von dem Elektromotor angetriebene Fahrzeugklappe allein durch ihre Gewichtskraft schließt, was zu einer Verletzungsgefahr führen könnte.

Bei einer Rotation des Bremsrotors mit der Motorwelle um die Motorachse bildet der Bremsrotor vorzugsweise einen hohlzylindrischen und zur Motorachse koaxialen Rotationskörper. Besonders bevorzugt ist der Bremsrotor hohlzylindrisch geformt und koaxial zur Motorachse angeordnet. Ein Außenradius des Rotationskörpers oder des Bremsrotors radial zur Motorachse ist vorzugsweise geringfügig kleiner, beispielsweise um 0,1 mm bis 1 mm kleiner, insbesondere um 0,2 mm bis 0,6 mm kleiner, bevorzugt um 0,3 mm kleiner, als ein Innenradius des Stators radial zur Motorachse. Dadurch kann der Bremsrotor in dem Stator reibungsfrei rotieren und hat eine hohe magnetische Wechselwirkung mit dem Stator.

In einer alternativen Ausgestaltung können der Bremsrotor und der Antriebsrotor jeweils hohlzylindrisch geformt, zu der Motorachse koaxial und entlang der Motorachse nebeneinander angeordnet und relativ zu der Motorwelle um die Motorachse rotierbar sein, wobei der Stator jeweils abschnittsweise in dem Bremsrotor und in dem Antriebsrotor angeordnet und auf der Motorwelle befestigt ist. Nachteilig an dieser alternativen Ausgestaltung ist, dass bei gleichem Außenradius des Elektromotors radial zur Motorachse der Spalt zwischen Bremsrotor und Stator näher an der Motorachse liegt, sodass die magnetische Wechselwirkung zwischen Bremsrotor und Stator ein geringeres Bremsmoment auf die Motorwelle bewirkt. Wenn für eine Anwendung ein bestimmtes Bremsmoment erforderlich ist, wird der Elektromotor also größer, schwerer und teurer.

### Vorteilhafte Wirkungen

Dadurch, dass sowohl der Antriebsrotor als auch der Bremsrotor mit dem gleichen Stator magnetisch zusammenwirken, sind keine separaten Statoren für Antrieb und Hysteresebremse notwendig, sodass der Elektromotor besonders einfach, kompakt und leicht aufgebaut ist und besonders kostengünstig hergestellt werden kann. Weiterhin können alle magnetischen Komponenten des Elektromotors auf einfache Weise ein einem gemeinsamen Gehäuse eingeschlossen werden, das beispielsweise dazu dienen kann, die Komponenten vor Fremdkörpern zu schützen und/oder die magnetischen Komponenten gegenüber einer Umgebung des Elektromotors magnetisch abzuschirmen.

### Beschreibung der Ausführungsarten

Der Bremsrotor besteht vorzugsweise aus einem weichmagnetischen Material, sodass der Bremsrotor von dem Stator magnetisiert werden kann. Der Bremsrotor besteht beispielsweise aus einer Aluminium-Nickel-Kobalt-Legierung, aus einer Eisen-Chrom-Kobalt-Legierung oder aus einem anderen von üblichen Hysteresebremsen bekannten Material.

Ein Außenradius des Bremsrotors radial zur Motorachse entspricht vorzugsweise einem Außenradius des Antriebsrotors radial zur Motorachse. Dadurch wird der Raum innerhalb des Stators optimal ausgenutzt, und der Bremsrotor möglichst nah an dem Stator angeordnet, um eine starke magnetische Wechselwirkung und somit eine starke Bremswirkung mit möglichst geringem Materialbedarf und möglichst geringem Platzbedarf zu erreichen.

Der Bremsrotor ist vorzugsweise durch eine Distanzhülse radial zur Motorachse von der Motorwelle beabstandet. Die Bremswirkung der Hysteresebremse kommt hauptsächlich durch die Bereiche des Bremsrotors zu Stande, die nahe an dem Stator angeordnet sind, weil hier die magnetische Wechselwirkung mit dem Stator und der Hebelarm für das auf die Motorwelle wirkende Bremsmoment am größten sind. Wird die Distanzhülse aus einem nicht von dem Stator magnetisierbaren Material, beispielsweise aus einem Kunststoff, gefertigt, können dadurch die Kosten und/oder das Gewicht des Elektromotors reduziert werden, ohne die Bremswirkung wesentlich zu verringern.

Die Distanzhülse besteht vorzugsweise aus einem Kunststoff, bevorzugt aus Polybutylenterephthalat oder Polyamid, besonders bevorzugt aus Polyamid 6.6. Aus einem Kunststoff lässt sich eine besonders leichte Distanzhülse kostengünstig in einer optimal an den Bremsrotor und die Motorwelle angepassten Form, beispielsweise durch Spritzgießen, herstellen. Die genannten Kunststoffe zeichnen sich insbesondere durch eine hohe Festigkeit, Steifigkeit und Maßbeständigkeit aus, wodurch die Distanzhülse auch bei hohen Rotationsgeschwindigkeiten und Bremskräften sicher an der Motorwelle und dem Bremsrotor befestigt werden kann.

Die Distanzhülse enthält vorzugsweise zumindest eine Aussparung zur Reduzierung einer thermischen Ausdehnung der Distanzhülse. Durch die schnelle und wiederholte Magnetisierung des Bremsrotors im Betrieb des Elektromotors können sich der Bremsrotor und die Distanzhülse stark erhitzen. Typischerweise liegt die Betriebstemperatur des Bremsrotors in einem Bereich von -40 °C bis +120 °C. Da der thermische Ausdehnungskoeffizient typischer Materialen für den Bremsrotor kleiner ist als der thermische Ausdehnungskoeffizient typischer Materialien für die Distanzhülse, kann es zu Spannungen kommen, die die Bauteile beschädigen könnten. Diese Gefahr wird durch die Aussparung verringert. Ein Bremsrotor aus einer Aluminium-Nickel-Kobalt-Legierung hat beispielsweise einen thermischen Ausdehnungskoeffizient von 11 · 10⁻⁶ K⁻¹. Eine Distanzhülse aus Polyamid 6.6 hat beispielsweise einen thermischen Ausdehnungskoeffizienten von 5 · 10⁻⁵ K⁻¹.

Die Distanzhülse umfasst vorzugsweise einen an der Motorwelle anliegenden, bevorzugt zur Motorachse koaxialen, Innenzylinder und einen an dem Bremsrotor anliegenden, bevorzugt zur Motorachse koaxialen Außenzylinder. Der Außenzylinder ist von dem Innenzylinder radial zur Motorachse beabstandet und vorzugsweise nur durch eine Anzahl von, beispielsweise 2, 4, 6, 8 oder 10, Stegen mit dem Innenzylinder verbunden. Zwischen den Stegen liegende Aussparungen erlauben eine Ausdehnung des Materials der Distanzhülse, ohne eine zu hohe zur Motorachse radiale Spannung zu erzeugen, die den Bremsrotor beschädigen könnte. Die Stege verlaufen vorzugsweise nicht geradlinig radial zur Motorachse, sondern sind gebogen. Dadurch kann eine durch Ausdehnung des Materials der Distanzhülse erzeugte und zur Motorachse radiale Spannung vorteilhafterweise in ein Biegemoment der Stege umgewandelt werden.

Die Distanzhülse ist vorzugsweise bezüglich einer Rotation um die Motorachse und/oder bezüglich einer Translation entlang der Motorachse formschlüssig mit der Motorwelle und/oder dem Bremsrotor verbunden. Eine formschlüssige Verbindung hat beispielsweise gegenüber einer Klebeverbindung den Vorteil, dass sie auch unter hohen thermischen und/oder mechanischen Belastungen beständig ist, sodass eine besonders zuverlässige Bremswirkung und somit ein besonders sicherer Elektromotor bewirkt wird. Gegenüber einer Pressverbindung hat eine formschlüssige Verbindung den Vorteil, dass die mechanische Belastung der verbundenen Bauteile geringer ist, was insbesondere bei dem typischerweise spröden Material des Bremsrotors von Vorteil ist.

Die Distanzhülse kann beispielsweise im Wesentlichen hohlzylindrisch geformt und koaxial zu Motorachse angeordnet sein. Zur formschlüssigen Verbindung der Distanzhülse mit dem Bremsrotor kann die Distanzhülse beispielsweise an einer radial zur Motorachse äußeren Zylindermantelfläche der Distanzhülse zumindest eine um die Motorachse umlaufende Nut und/oder eine Anzahl von Vorsprüngen aufweisen. Der Bremsrotor kann einen zu der Nut komplementär geformten Steg und/oder zu den Vorsprüngen komplementär geformte Vertiefungen umfassen, um eine formschlüssige Verbindung zu bilden. Die Vorsprünge und/oder der Steg sind vorzugsweise abgerundet, um eine Spannungskonzentration an Kanten, die zu einer Materialüberlastung führen könnte, zu vermeiden.

Die Distanzhülse umfasst vorzugsweise zumindest zwei, insbesondere zumindest vier, um die Motorachse gleichverteilte und/oder möglichst kleine Vorsprünge, damit dazu komplementären Vertiefungen in dem Bremsrotor keine ungleichmäßige Bremswirkung verursachen.

Zur formschlüssigen Verbindung der Distanzhülse mit der Motorwelle kann eine Mantelfläche der Motorwelle beispielsweise einseitig abgeflacht sein, insbesondere in Form eines sogenannten D-cuts, wobei eine radial zur Motorachse innere Zylindermantelfläche der Distanzhülse komplementär zu der Abflachung der Motorwelle geformt ist. Zur formschlüssigen Verbindung der Distanzhülse mit der Motorwelle kann die Motorwelle beispielsweise einen um die Motorachse umlaufenden Absatz und/oder einen auf der Motorwelle befestigten Ring, insbesondere einen Sprengring oder einen auf die Motorwelle aufgepressten Metallring, beispielsweise einen Kupferring oder Stahlring, umfassen, wobei die Distanzhülse entlang der Motorachse zwischen dem Absatz und dem Ring angeordnet sein kann.

Der Elektromotor umfasst vorzugsweise einen Abstand entlang der Motorachse zwischen dem Bremsrotor und dem Antriebsrotor zur thermischen und/oder magnetischen Entkopplung des Bremsrotors von dem Antriebsrotor, wobei der Abstand bevorzugt von 1 mm bis 10 mm, besonders bevorzugt von 3 mm bis 5 mm, beträgt. Der Abstand stellt ohne zusätzliche Bauteile und somit besonders kostengünstig sicher, dass die Magnetisierung des Bremsrotors und somit die Bremswirkung nicht durch von dem Antriebsrotor abgegebene Wärme und/oder Magnetfelder beeinträchtigt wird.

Entlang der Motorachse zwischen dem Bremsrotor und dem Antriebsrotor ist vorzugsweise ein Abschirmelement zur thermischen und/oder magnetischen Abschirmung des Bremsrotors von dem Antriebsrotor angeordnet, wobei das Abschirmelement bevorzugt aus einem Kunststoff oder einem Stahl besteht und/oder an dem Bremsrotor befestigt ist. Das Abschirmelement stellt sicher, dass die Magnetisierung des Bremsrotors und somit die Bremswirkung nicht durch von dem Antriebsrotor abgegebene Wärme und/oder Magnetfelder beeinträchtigt wird. Für einen möglichst einfachen Aufbau des Elektromotors kann das Abschirmelemente einstückig mit der Distanzhülse sein.

Das Abschirmelement kann beispielsweise ringförmig sein, wobei das Abschirmelement vorzugsweise senkrecht zur Motorachse ausgerichtet ist, auf der Motorachse zentriert ist und/oder radial zur Motorachse den gleichen Außendurchmesser hat wie der Antriebsrotor.

Der Elektromotor umfasst vorzugsweise ein den Stator, den Antriebsrotor und den Bremsrotor umschließendes Gehäuse, wobei der Stator an dem Gehäuse befestigt ist, und die Motorwelle an dem Gehäuse um die Motorachse rotierbar gelagert ist, sodass der Elektromotor als Innenläufer ausgestaltet ist. Alternativ kann die Motorwelle an dem Gehäuse befestigt sein, und der Stator an dem Gehäuse um die Motorachse rotierbar gelagert sein, sodass der Elektromotor als Außenläufer ausgestaltet ist.

Das Gehäuse kann den Stator, den Antriebsrotor und den Bremsrotor vor Fremdkörpern, insbesondere vor magnetisch anziehbaren Fremdkörpern wie Metallspänen, schützen und/oder gegenüber einer Umgebung des Elektromotors magnetisch abschirmen, um eine zuverlässige Funktion des Elektromotors sicherzustellen.

Der Stator ist vorzugsweise bezüglich einer Rotation um die Motorachse und/oder einer Translation entlang der Motorachse formschlüssig mit dem Gehäuse verbunden, wobei entlang der Motorachse zwischen dem Stator und dem Gehäuse bevorzugt ein Adaptereinsatz, besonders bevorzugt ein um die Motorachse umlaufender Adapterring, angeordnet ist.

Eine formschlüssige Verbindung hat beispielsweise gegenüber einer Klebeverbindung den Vorteil, dass sie auch unter hohen thermischen und/oder mechanischen Belastungen beständig ist, sodass eine besonders zuverlässige Bremswirkung und somit ein besonders sicherer Elektromotor bewirkt wird. Gegenüber einer Pressverbindung hat eine formschlüssige Verbindung den Vorteil, dass die mechanische Belastung der verbundenen Bauteile geringer ist, was insbesondere bei dem typischerweise spröden Material des Stators von Vorteil ist.

Ein Adaptereinsatz hat den Vorteil, dass entlang der Motorachse unterschiedliche lange Statoren in das gleiche Gehäuse eingebaut werden können, ohne dass sich dadurch die Außenmaße des Elektromotors ändern.

Durch entlang der Motorachse unterschiedlich lange Statoren und/oder Bremsrotoren lassen sich Elektromotoren mit unterschiedlich starkem Bremsmoment herstellen. Wenn die Länge des Stators nicht verändert wird oder unterschiedlich lange Statoren mit Hilfe eines Adaptereinsatz in gleich lange Gehäuse eingebaut werden, können so Elektromotoren mit unterschiedlich starkem Bremsmoment und identischen Außenmaßen hergestellt werden. Aus solchen Elektromotoren kann auf einfache Weise nach Art eines Baukastensystems ein Elektromotor mit einem für eine spezifische Anwendung, beispielsweise für eine Fahrzeugklappe mit einer bestimmten Masse, geeigneten Bremsmoment ausgewählt werden, ohne dass dafür andere Komponenten eines Antriebssystems der Fahrzeugklappe oder der benötigte Bauraum angepasst werden müssten.

Das permanentmagnetische Material des Stators ist vorzugsweise ein Ferrit. Ein Ferritmagnet hat im Verhältnis zu einem Selten-Erd-Magnet den Vorteil geringerer Kosten, erzeugt aber eine geringere magnetische Feldstärke und somit in der Hysteresebremse ein geringeres Bremsmoment. Dieser Nachteil kann erfindungsgemäß dadurch überkommen werden, dass ein Außenradius des Bremsrotors radial zur Motorachse möglichst groß gewählt wird und insbesondere einem Außenradius des Antriebsrotors radial zur Motorachse entspricht. Dadurch wirkt die magnetische Wechselwirkung zwischen Stator und Bremsrotor mit einem großen Hebelarm auf die Motorwelle und erzeugt ein entsprechend großes Bremsmoment.

Die Erfindung betrifft eine Verwendung des erfindungsgemäßen Elektromotors zum Antrieb einer Fahrzeugklappe, wobei der Elektromotor die Fahrzeugklappe bevorzugt über einen Spindelantrieb antreibt.

Bei einer - bei modernen Fahrzeugen oftmals schweren - Fahrzeugklappe ist es besonders wichtig, dass ein ungewolltes Zufallen der Fahrzeugklappe, das zu schweren Verletzungen führen kann, wenn ein Körperteil von der Fahrzeugklappe eingeklemmt wird, zuverlässig verhindert wird. Daher ist der erfindungsgemäße Elektromotor, dessen Bremswirkung unabhängig von einer Stromversorgung des Elektromotors und von einem Bewegungszustand der Fahrzeugklappe eintritt, besonders zum Antrieb einer Fahrzeugklappe geeignet. Weiterhin ist der für einen Elektromotor zur Verfügung stehende Bauraum in Fahrzeugen in der Regel sehr begrenzt, sodass der besonders kompakte Aufbau des erfindungsgemäßen Elektromotors für die Verwendung in einem Fahrzeug besonders geeignet ist.

Die Erfindung betrifft ein Verfahren zur Herstellung eines erfindungsgemäßen Elektromotors, umfassend folgende Schritte: Befestigen des Antriebsrotors und des, bevorzugt nicht magnetisierten, Bremsrotors auf der Motorwelle und Anordnen der Motorwelle in dem Stator. Der Bremsrotor ist bei dem Befestigen auf der Motorwelle bevorzugt noch nicht magnetisiert, sodass der Bremsrotor einfach mit üblichen Montagewerkzeugen, die mit einem magnetisierten Bremsrotor magnetisch wechselwirken könnten, befestigt werden kann. Sobald der Bremsrotor in dem Stator angeordnet wird, magnetisiert der Stator den Bremsrotor, sodass die Hysteresebremse einsatzbereit ist.

Das Befestigen des Antriebsrotors und des Bremsrotors auf der Motorwelle erfolgt vorzugsweise vor dem Anordnen der Motorwelle in dem Stator, weil die Motorwelle vor dem Anordnen in dem Stator einfacher zugänglich ist und das Befestigen so nicht durch magnetische Wechselwirkungen von Antriebsrotor, Bremsrotor, Motorwelle und/oder Montagewerkzeugen mit dem Stator behindert wird.

Die Distanzhülse wird vorteilhafterweise formschlüssig mit dem Bremsrotor verbunden, um eine besonders zuverlässige Verbindung zu erhalten. Wenn der Bremsrotor aus einem für Hysteresebremsen üblichen Material besteht, kann dieser nur mit einer hohen Fertigungstoleranz hergestellt werden. Daher würde es bei einer voneinander unabhängigen Herstellung des Bremsrotors und der Distanzhülse zu mechanischem Spiel zwischen den beiden Bauteilen kommen, sodass es insbesondere bei Richtungswechseln des Elektromotors zu einer erhöhten Geräuschentwicklung und einem erhöhten Verschleiß kommen könnte. Da übliche Materialien für Hysteresebremsen spröde sind, kann die Distanzhülse nicht mit einer Pressverbindung mit dem Bremsrotor verbunden werden.

Das Verfahren umfasst vorzugsweise ein Spritzgießen einer Distanzhülse in den Bremsrotor vor dem Befestigen des Bremsrotors auf der Motorwelle, sodass die Distanzhülse den Bremsrotor nach dem Befestigen radial zur Motorachse von der Motorwelle beabstandet. Durch das Spritzgießen in den Bremsrotor werden die Distanzhülse und der Bremsrotor spielfrei formschlüssig miteinander verbunden, ohne den Bremsrotor dabei mechanisch zu belasten. Außerdem ist kein separater Arbeitsschritt zum Befestigen der Distanzhülse an dem Bremsrotor, beispielsweise durch eine Klebeverbindung, notwendig. Eine Klebeverbindung hätte außerdem den Nachteil, dass sie ein größeres mechanisches Spiel zwischen Distanzhülse und Bremsrotor erfordern würde, was zu einem schlechteren Rundlauf des Elektromotors führen könnte.

Wenn der Bremsrotor aus einem für Hysteresebremsen üblichen Material besteht, kann dieser nur mit einer hohen Fertigungstoleranz hergestellt werden, sodass bei einer Rotation der Motorwelle mit dem darauf befestigten Bremsrotor um die Motorachse eine Unwucht entstehen kann, die zu Vibrationen, erhöhter Geräuschentwicklung und erhöhtem Verschleiß führen kann. Eine spanende Nachbearbeitung des Bremsrotors zum Auswuchten ist aufgrund der Sprödigkeit des Bremsrotors nicht möglich.

Das Verfahren umfasst daher vorzugsweise ein Auswuchten der Motorwelle bezüglich einer Rotation um die Motorachse durch ein Nachbearbeiten des Antriebsrotors nach dem Befestigen des Antriebsrotors und des Bremsrotors auf der Motorwelle und vorzugsweise vor dem Anordnen der Motorwelle in dem Stator.

Das Nachbearbeiten des Antriebsrotors zum Auswuchten der Motorwelle kann mit Verfahren erfolgen, die aus der Produktion üblicher Elektromotoren bekannt sind. Erfindungsgemäß kann durch das Nachbearbeiten des Antriebsrotors somit auch eine mögliche Unwucht des Bremsrotors kompensiert werden, um einen ruhig und verschleißarm laufenden Elektromotor zu erreichen.

Das Auswuchten erfolgt vorzugsweise vor dem Anordnen der Motorwelle in dem Stator, weil die Motorwelle vor dem Anordnen in dem Stator einfacher zugänglich ist und das Auswuchten so nicht durch magnetische Wechselwirkungen von Antriebsrotor, Bremsrotor, Motorwelle und/oder Nachbearbeitungswerkzeugen mit dem Stator behindert wird.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind.
Figur 1 zeigt einen schematischen Längsschnitt eines erfindungsgemäßen Elektromotors.
Figur 2 zeigt einen schematischen Querschnitt des Bremsrotors des Elektromotors aus Figur 1.
Figur 3 zeigt einen vergrößerten Ausschnitt aus Figur 1 im Bereich des Bremsrotors.
Figur 4 zeigt einen vergrößerten Ausschnitt aus Figur 1 im Bereich des Bremsrotors mit einer alternativ gestalteten Distanzhülse.
Figur 5 zeigt einen schematischen Längsschnitt eines weiteren erfindungsgemäßen Elektromotors.
Figur 6 zeigt eine schematische Ansicht der Distanzhülse des Elektromotors aus Figur 1.
Figur 7 zeigt eine schematischen Ansicht der Motorwelle des Elektromotors aus Figur 1.

### Fig.1

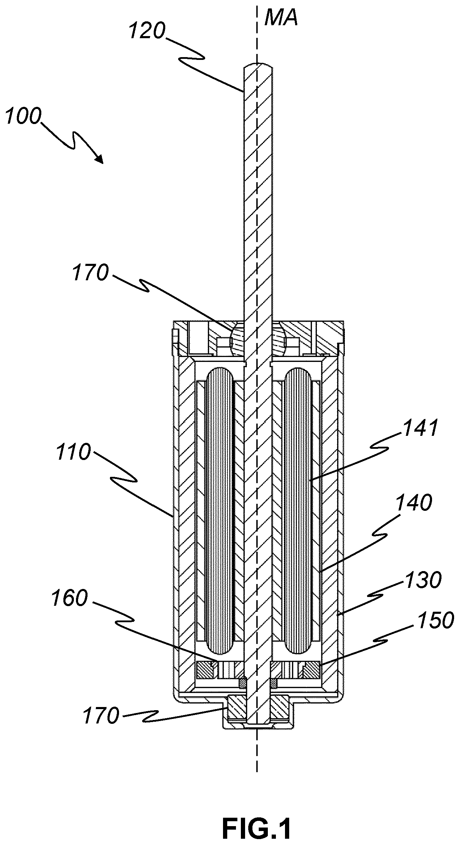

Figur 1 zeigt einen schematischen Längsschnitt entlang der Motorachse MA eines erfindungsgemäßen Elektromotors 100.

Der gezeigte Elektromotor 100 umfasst einen hohlzylindrisch geformten und zu der Motorachse MA koaxial angeordneten Stator 130 aus einem permanentmagnetischen Material, beispielsweise aus einem Ferrit.

Der gezeigte Elektromotor 100 umfasst eine koaxial zu der Motorachse MA und abschnittsweise in dem Stator 130 angeordnete und relativ zu dem Stator 130 um die Motorachse MA rotierbar gelagerte Motorwelle 120 und einen in dem Stator 130 angeordneten und auf der Motorwelle 120 befestigten Antriebsrotor 140, umfassend eine Anzahl von Spulen 141 zum Antrieb einer Rotation der Motorwelle 120 relativ zu dem Stator 130 um die Motorachse MA.

Der gezeigte Elektromotor 100 umfasst einen in dem Stator 130 angeordneten, entlang der Motorachse MA mit einem Abstand von beispielsweise 3 mm bis 5 mm neben dem Antriebsrotor 140 auf der Motorwelle 120 befestigten und von dem Stator 130 magnetisierbaren Bremsrotor 150, beispielsweise aus einer Aluminium-Nickel-Kobalt-Legierung.

Ein Außenradius des Bremsrotors 150 radial zur Motorachse MA entspricht beispielsweise einem Außenradius des Antriebsrotors 140 radial zur Motorachse MA.

Der Bremsrotor 150 ist durch eine Distanzhülse 160, beispielsweise aus einem Kunststoff, radial zur Motorachse MA von der Motorwelle 120 beabstandet.

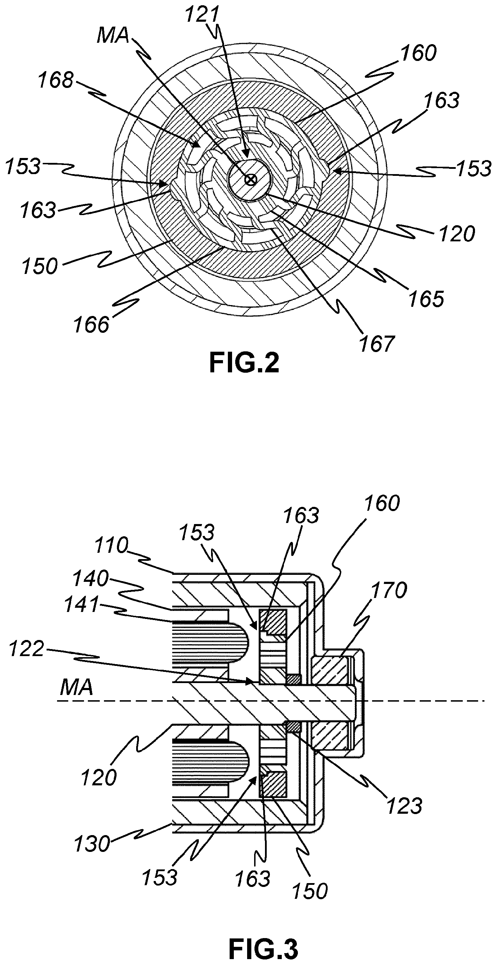

Der Bremsrotor 150 und die Distanzhülse 160 werden anhand der Figuren 2 bis 4 genauer beschrieben.

Der gezeigte Elektromotor 100 umfasst ein den Stator 130, den Antriebsrotor 140 und den Bremsrotor 150 umschließendes Gehäuse 110, wobei der Stator 130 an dem Gehäuse 110 befestigt ist, und die Motorwelle 120 an dem Gehäuse 110 um die Motorachse MA rotierbar gelagert ist. Die Motorwelle 120 ist beispielsweise entlang der Motorachse MA an beiden Enden des Gehäuses 110 über jeweils ein Lager 170 an dem Gehäuse 110 gelagert.

### Fig.2

Figur 2 zeigt einen schematischen Querschnitt senkrecht zur Motorachse MA durch den Bremsrotor 150 des Elektromotors 100 aus Figur 1.

In Figur 2 ist erkennbar, dass die Distanzhülse 160 bezüglich einer Rotation um die Motorachse MA formschlüssig mit der Motorwelle 120 und dem Bremsrotor 150 verbunden ist.

Die gezeigte Distanzhülse 160 weist an einer radial zur Motorachse MA äußeren Zylindermantelfläche der Distanzhülse 160 eine Anzahl von, beispielsweise vier jeweils um 90° um die Motorachse MA versetzten, Vorsprüngen 163 auf (in der dargestellten Schnittebene sind nur zwei Vorsprünge sichtbar). Die Vorsprünge sind beispielsweise abgerundet. Der Bremsrotor 150 umfasst zu den Vorsprüngen 163 komplementär geformte Vertiefungen 153, in die die Vorsprünge 163 bezüglich einer Rotation um die Motorachse MA formschlüssig eingreifen.

Zur formschlüssigen Verbindung der Distanzhülse 160 mit der Motorwelle 120 ist eine Mantelfläche der gezeigten Motorwelle 120 einseitig abgeflacht, wobei eine radial zur Motorachse MA inneren Zylindermantelfläche der Distanzhülse 160 mit der Abflachung 121 der Motorwelle 120 bezüglich einer Rotation um die Motorachse MA formschlüssig zusammenwirkt.

Die gezeigte Distanzhülse 160 umfasst einen an der Motorwelle 120 anliegenden und zur Motorachse MA koaxialen Innenzylinder 165 und einen an dem Bremsrotor 150 anliegenden und zur Motorachse MA koaxialen Außenzylinder 166. Der Außenzylinder 166 ist von dem Innenzylinder 165 radial zur Motorachse MA beabstandet und nur durch eine Anzahl von, beispielsweise acht, gebogenen Stegen 167 mit dem Innenzylinder 165 verbunden. Zwischen den Stegen 167 liegen jeweils Aussparungen 168.

### Fig.3

Figur 3 zeigt einen vergrößerten Ausschnitt aus Figur 1 im Bereich des Bremsrotors 150.

In Figur 3 ist erkennbar, dass die Distanzhülse 160 bezüglich einer Translation entlang der Motorachse MA formschlüssig mit der Motorwelle 120 und dem Bremsrotor 150 verbunden ist.

Zur formschlüssigen Verbindung der Distanzhülse 160 mit dem Bremsrotor 150 bezüglich einer Translation entlang der Motorachse MA weist die gezeigte Distanzhülse 160 an einer radial zur Motorachse MA äußeren Zylindermantelfläche der Distanzhülse 160 eine Anzahl von, beispielsweise vier jeweils um 90° um die Motorachse MA versetzten, Vorsprüngen 163 auf (in der dargestellten Schnittebene sind nur zwei Vorsprünge sichtbar). Der Bremsrotor 150 umfasst zu den Vorsprüngen 163 komplementär geformte Vertiefungen 153, in die die Vorsprünge 163 bezüglich einer Translation entlang der Motorachse MA formschlüssig eingreifen.

Zur bezüglich einer Translation entlang der Motorachse MA formschlüssigen Verbindung der Distanzhülse 160 mit der Motorwelle 120 umfasst die gezeigte Motorwelle 120 einen um die Motorachse MA umlaufenden Absatz 122 und einen auf der Motorwelle 120 befestigten Ring 123, beispielsweise einen auf die Motorwelle 120 aufgepressten Stahlring, wobei die Distanzhülse 160 entlang der Motorachse MA zwischen dem Absatz 122 und dem Ring 123 angeordnet ist.

### Fig.4

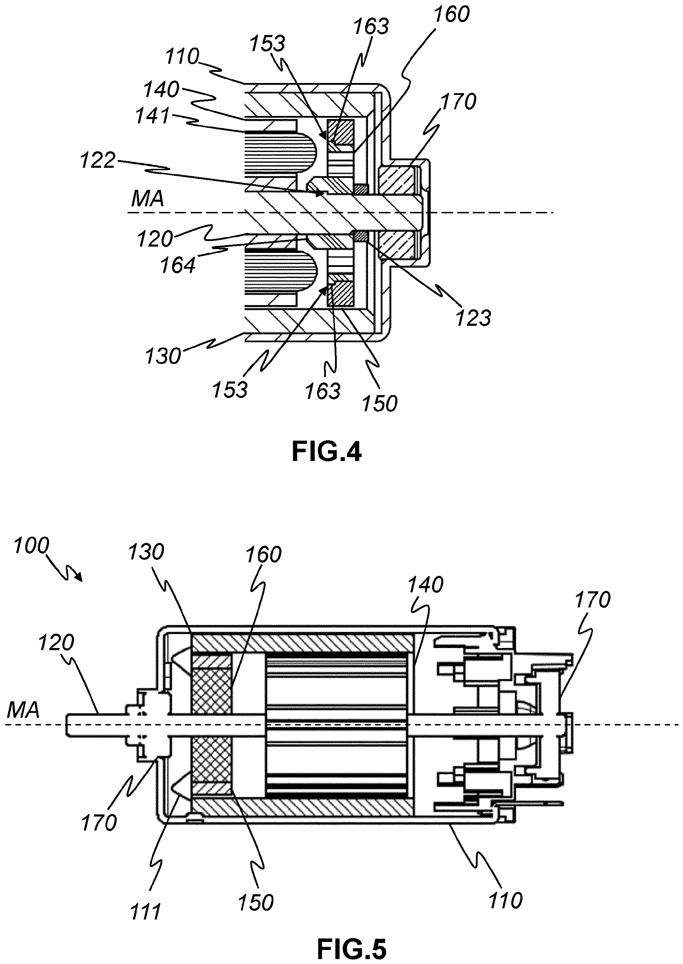

Figur 4 zeigt einen vergrößerten Ausschnitt aus Figur 1 im Bereich des Bremsrotors 150 mit einer alternativ gestalteten Distanzhülse 160.

Die in Figur 4 gezeigte Distanzhülse 160 unterscheidet sich von der in Figur 3 gezeigten Distanzhülse 160 dadurch, dass sie einen relativ zu dem Bremsrotor 150 entlang der Motorachse MA verlängerten Führungsabschnitt 164 zur Führung der Motorwelle 120 in der Distanzhülse 160 aufweist. Der Führungsabschnitt 164 verhindert vorteilhafterweise ein Verkippen der Distanzhülse 160 relativ zu der Motorwelle 120 und verbessert dadurch die Laufruhe und Langlebigkeit des Elektromotors 100.

### Fig.5

Figur 5 zeigt einen schematischen Längsschnitt entlang der Motorachse MA eines weiteren erfindungsgemäßen Elektromotors 100.

Der in Figur 5 gezeigte Elektromotor 100 unterscheidet sich von dem in Figur 1 gezeigten Elektromotor 100 dadurch, dass der Stator 130 bezüglich einer Translation entlang der Motorachse MA formschlüssig mit dem Gehäuse 110 verbunden ist, wobei entlang der Motorachse MA zwischen dem Stator 130 und dem Gehäuse 110 ein Adaptereinsatz 111, beispielsweise ein um die Motorachse MA umlaufender Adapterring, angeordnet ist.

### Fig.6

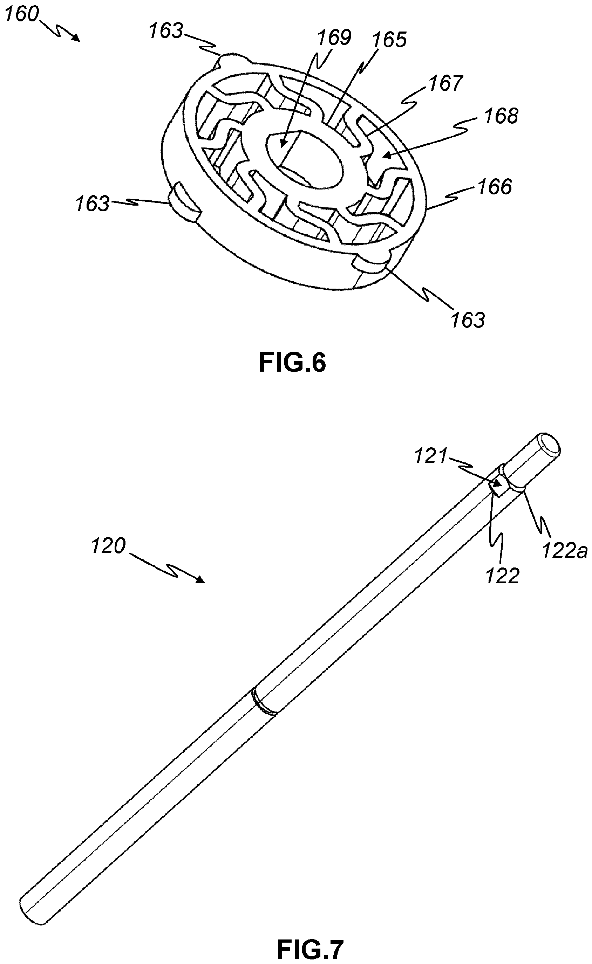

Figur 6 zeigt eine schematische Ansicht der Distanzhülse 160 des Elektromotors 100 aus Figur 1.

Die gezeigte Distanzhülse 160 weist an einer äußeren Zylindermantelfläche der Distanzhülse 160 eine Anzahl von, beispielsweise vier jeweils um 90° versetzten, Vorsprüngen 163 zur formschlüssigen Verbindung der Distanzhülse 160 mit dem Bremsrotor (nicht dargestellt) des Elektromotors 100 auf (in der dargestellten Ansicht sind nur drei Vorsprünge sichtbar). Die Vorsprünge sind beispielsweise abgerundet.

Zur formschlüssigen Verbindung der Distanzhülse 160 mit der Motorwelle (nicht dargestellt) des Elektromotors 100 weist eine innere Zylindermantelfläche der Distanzhülse eine Abflachung 169 auf.

Die gezeigte Distanzhülse 160 umfasst einen Innenzylinder 165 zur Anlage an die Motorwelle 120 des Elektromotors 100 und einen Außenzylinder 166 zur Anlage an den Bremsrotor 150. Der Außenzylinder 166 ist von dem Innenzylinder 165 beabstandet und nur durch eine Anzahl von, beispielsweise acht, gebogenen Stegen 167 mit dem Innenzylinder 165 verbunden. Zwischen den Stegen 167 liegen jeweils Aussparungen 168.

### Fig.7

Figur 7 zeigt eine schematischen Ansicht der Motorwelle 120 des Elektromotors 100 aus Figur 1.

Zur formschlüssigen Verbindung der Distanzhülse (nicht dargestellt) des Elektromotors 100 mit der Motorwelle 120 bezüglich einer Rotation um die Motorwelle 120 ist eine Mantelfläche der gezeigten Motorwelle 120 einseitig mit einer Abflachung 121 versehen. Ein Rand der Abflachung 121 definiert außerdem einen Absatz 122 zur formschlüssigen Verbindung der Motorwelle 120 mit der Distanzhülse 160 bezüglich einer Translation entlang der Motorwelle 120.

An einem weiteren Absatz 122a kann ein Ring (nicht dargestellt) auf der Motorwelle 120 befestigt werden, sodass die Distanzhülse 160 entlang der Motorwelle 120 zwischen dem Absatz 122 und dem Ring bezüglich einer Translation entlang der Motorwelle 120 formschlüssig gehalten wird.

**Liste der Bezugszeichen**

| | | | |
|---|---|---|---|
| 100 | Elektromotor | 150 | Bremsrotor |
| 110 | Gehäuse | 153 | Vertiefung |
| 111 | Adaptereinsatz | 160 | Distanzhülse |
| 120 | Motorwelle | 163 | Vorsprung |
| 121 | Abflachung | 164 | Führungsabschnitt |
| 122 | Absatz | 165 | Innenzylinder |
| 123 | Ring | 166 | Außenzylinder |
| 130 | Stator | 167 | Steg |
| 140 | Antriebsrotor | 168 | Aussparung |
| 141 | Spule | 169 | Abflachung |
| | | 170 | Lager |
| | | MA | Motorachse |

## Patentansprüche

1. Elektromotor (100) zum Antrieb einer Fahrzeugklappe, der Elektromotor (100) umfassend
a. einen hohlzylindrisch geformten und zu einer Motorachse (MA) koaxial angeordneten Stator (130) aus einem permanentmagnetischen Material,
b. eine koaxial zu der Motorachse (MA) und zumindest abschnittsweise in dem Stator (130) angeordnete und relativ zu dem Stator (130) um die Motorachse (MA) rotierbar gelagerte Motorwelle (120) und
c. einen in dem Stator (130) angeordneten und auf der Motorwelle (120) befestigten Antriebsrotor (140), umfassend eine Anzahl von Spulen (141) zum Antrieb einer Rotation der Motorwelle (120) relativ zu dem Stator (130) um die Motorachse (MA),
**gekennzeichnet durch**
d. einen in dem Stator (130) angeordneten, entlang der Motorachse (MA) neben dem Antriebsrotor (140) auf der Motorwelle (120) befestigten und von dem Stator (130) magnetisierbaren Bremsrotor (150).

2. Elektromotor (100) nach Anspruch 1,
**dadurch gekennzeichnet, dass**
ein Außenradius des Bremsrotors (150) radial zur Motorachse (MA) einem Außenradius des Antriebsrotors (140) radial zur Motorachse (MA) entspricht.

3. Elektromotor (100) nach Anspruch 1 oder 2,
**dadurch gekennzeichnet, dass**
der Bremsrotor (150) durch eine Distanzhülse (160) radial zur Motorachse (MA) von der Motorwelle (120) beabstandet ist.

4. Elektromotor (100) nach Anspruch 3,
**dadurch gekennzeichnet, dass**
die Distanzhülse (160) aus einem Kunststoff besteht.

5. Elektromotor (100) nach Anspruch 3 oder 4,
**dadurch gekennzeichnet, dass**
die Distanzhülse (160) zumindest eine Aussparung zur Reduzierung einer thermischen Ausdehnung der Distanzhülse (160) enthält.

6. Elektromotor (100) nach einem der Ansprüche 3 bis 5,
**dadurch gekennzeichnet, dass**
die Distanzhülse (160) bezüglich einer Rotation um die Motorachse (MA) und/oder bezüglich einer Translation entlang der Motorachse (MA) formschlüssig mit der Motorwelle (120) und/oder dem Bremsrotor (150) verbunden ist.

7. Elektromotor (100) nach einem der Ansprüche 1 bis 6,
**gekennzeichnet durch**
einen Abstand entlang der Motorachse (MA) zwischen dem Bremsrotor (150) und dem Antriebsrotor (140) zur thermischen und/oder magnetischen Entkopplung des Bremsrotors (150) von dem Antriebsrotor (140).

8. Elektromotor (100) nach einem der Ansprüche 1 bis 7,
**dadurch gekennzeichnet, dass**
entlang der Motorachse (MA) zwischen dem Bremsrotor (150) und dem Antriebsrotor (140) ein Abschirmelement (155) zur thermischen und/oder magnetischen Abschirmung des Bremsrotors (150) von dem Antriebsrotor (140) angeordnet ist.

9. Elektromotor (100) nach einem der Ansprüche 1 bis 8,
**gekennzeichnet durch**
ein den Stator (130), den Antriebsrotor (140) und den Bremsrotor (150) umschließendes Gehäuse (110), wobei der Stator (130) an dem Gehäuse (110) befestigt ist, und die Motorwelle (120) an dem Gehäuse (110) um die Motorachse (MA) rotierbar gelagert ist.

10. Elektromotor (100) nach Anspruch 9,
**dadurch gekennzeichnet, dass**
der Stator (130) bezüglich einer Rotation um die Motorachse (MA) und/oder einer Translation entlang der Motorachse (MA) formschlüssig mit dem Gehäuse (110) verbunden ist, wobei entlang der Motorachse (MA) zwischen dem Stator (130) und dem Gehäuse (110) ein Adaptereinsatz (111) angeordnet ist.

11. Elektromotor (100) nach einem der Ansprüche 1 bis 10,
**dadurch gekennzeichnet, dass**
das permanentmagnetische Material des Stators (130) ein Ferrit ist.

12. Verwendung des Elektromotors (100) nach einem der Ansprüche 1 bis 11 zum Antrieb einer Fahrzeugklappe.

13. Verfahren zur Herstellung des Elektromotors (100) nach einem der Ansprüche 1 bis 11,
**gekennzeichnet durch** folgende Schritte:
a. Befestigen des Antriebsrotors (140) und des Bremsrotors (150) auf der Motorwelle (120) und
b. Anordnen der Motorwelle (120) in dem Stator (130).

14. Verfahren nach Anspruch 13,
**gekennzeichnet durch** den Schritt:
Spritzgießen einer Distanzhülse (160) in den Bremsrotor (150) vor dem Befestigen des Bremsrotors (150) auf der Motorwelle (120), sodass die Distanzhülse (160) den Bremsrotor (150) nach dem Befestigen radial zur Motorachse (MA) von der Motorwelle (120) beabstandet.

15. Verfahren nach Anspruch 13 oder 14,
**gekennzeichnet durch** den Schritt:
Auswuchten der Motorwelle (120) bezüglich einer Rotation um die Motorachse (MA) durch ein Nachbearbeiten des Antriebsrotors (140) nach dem Befestigen des Antriebsrotors (140) und des Bremsrotors (150) auf der Motorwelle (120) und vor dem Anordnen der Motorwelle (120) in dem Stator (130).
